# EUROPÄISCHE PATENTSCHRIFT

(11) **EP 0 454 883 B1**
(45) Veröffentlichungstag und Bekanntmachung des Hinweises auf die Patenterteilung: **17.08.1994**
(21) Anmeldenummer: 90108327.9
(22) Anmeldetag: 02.05.1990
(51) Int. Cl.: G01L 9/12

(54) **Kapazitiver Sensor**
Capacitive sensor
Capteur capacitif

(43) Veröffentlichungstag der Anmeldung: 06.11.1991
(73) Patentinhaber: SIEMENS AKTIENGESELLSCHAFT, 80333 München (DE)
(72) Erfinder: Schörner, Reinhold, Dr., D-8521 Grossenseebach (DE)

(56) Entgegenhaltungen:
- EP-A- 0 291 885
- EP-A- 0 339 981
- FR-A- 1 546 836
- US-A- 3 962 921

## Beschreibung

Die Erfindung bezieht sich auf einen kapazitiven Sensor gemäß dem Oberbegriff des unabhängigen Patenanspruchs.

Bei kapazitiven Sensoren wird durch Einwirkung einer Meßgröße die Kapazität eines Meßkondensators verändert. Diese Kapazitätsänderung dient als Maß für die zu erfassende Meßgröße. Die Kapazitätsänderung kann abhängig von den Eigenschaften dieser Meßgröße verschiedene Ursachen haben.

Dies kann beispielsweise bei Chemosensoren eine durch die Einwirkung einer chemischen Substanz hervorgerufenen Änderung der dielektrischen Eigenschaften des im Meßkondensator befindlichen Dielektrikums sein.

Zur Messung mechanischer Größen, beispielsweise Kraft, Druck oder Beschleunigung, eignen sich insbesondere kapazitive Sensoren, bei denen unter der Wirkung der zu messenden Größe ein mit Elektroden versehener Körper relativ zu einer anderen Elektrode mechanisch ausgelenkt und die damit verbundene Kapazitätsänderung erfaßt wird.

Kapazitive Sensoren zur Messung mechanischer Größen haben dabei gegenüber piezoresistiven Sensoren, bei denen eine mechanische Auslenkung eines Körpers durch eine damit verbundene Änderung des Spannungszustandes von auf oder in diesem Körper angeordneten Silizium-Widerständen erfaßt wird, den Vorteil einer geringeren Temperaturempfindlichkeit. Außerdem können kapazitive Sensoren mit einer gegenüber piezoresistiven Sensoren erhöhten Empfindlichkeit hergestellt werden. Durch geringe mechanische Kräfte hervorgerufene kleine Auslenkungen lassen sich nämlich direkt als Wegänderung leichter erfassen als die mit diesen Auslenkungen durch die Änderung des Spannungszustandes einhergehenden Änderungen eines Piezowiderstandes.

Aus "IEEE Transactions on Electron Devices", Vol. ED-27, No. 5, May 1980, Seiten 927 bis 930 ist ein Drucksensor bekannt, der eine rechteckige Silizium-Membran enthält, die Teil eines n-dotierten Silizium-Tragkörpers ist und sich gegenüber einer Glasplatte befindet, die auf einem die Membran umgebenden Trägerrahmen vakuumdicht aufliegt. Die der Silizium-Membran gegenüberliegende Oberfläche der Glasplatte ist metallisiert und bildet die Gegenelektrode zur Silizium-Membran. Die Kontaktierung der metallisierten Glasfläche mit dem auf dem Silizium-Grundkörper befindlichen integrierten Schaltkreis erfolgt dadurch, daß ein Teil des ebenfalls aus Silizium bestehenden Trägerrahmens p-dotiert ist und mit der metallisierten Fläche der Glasplatte verbunden ist. Der Elektrodenabstand beträgt etwa 2 µm und das Volumen zwischen den beiden Elektroden ist evakuiert. Die Kapazitätsänderung dieses Drucksensors beträgt bei 4 x 10⁴ Pa Druckdifferenz etwa 14 %. Der integrierte Schaltkreis ist in den Trägerrahmen der Silizium-Membran integriert und besteht im wesentlichen aus einem Schmitt-Trigger-Oszillator, dessen Schwingungsperiode von der Kapazität des druckempfindlichen Kondensators abhängt.

Dieser bekannte Drucksensor hat jedoch bedingt durch seinen Aufbau insbesondere bei thermischer Beanspruchung Nachteile. Durch die unterschiedlichen thermischen Ausdehnungskoeffizienten von Glas und Silizium treten an den Verbindungsstellen mechanische Spannung auf, die die Eigenschaften der Membran in unerwünschter Weise beeinflussen. Außerdem befinden sich bei dem bekannten Sensor der integrierte Schaltkreis zur Erfassung der Kapazitätsänderung und die Membran auf demselben Siliziumkörper, so daß die ätztechnischen Prozeßschritte und die IC-Herstellungsschritte auf demselben Wafer erfolgen müssen.

Zur Vermeidung der bei einem Glas-Silizium-Aufbau bei thermischer Belastung auftretenden Probleme ist deshalb in der US-A-4 495 820 vorgeschlagen worden, die Silizium-Membran auf einen ebenfalls aus Silizium bestehenden Grundkörper anzuordnen. Ein die Silizium-Membran tragender Stützrahmen ist bei dieser bekannten Anordnung über eine dünne Glasschicht auf den Grundkörper gebondet. Gegenüber der von der Silizium-Membran gebildeten Elektrode sind auf dem Grundkörper zwei voneinander und durch eine Oxidschicht vom Grundkörper elektrisch isolierte Elektroden angeordnet. Zur Vermeidung zusätzlicher parasitärer Kapazitäten zwischen dem Stützrahmen und dem Grundkörper ist es erforderlich, den Grundkörper und den Stützrahmen auf gleiches elektrisches Potential zu legen. Dies hat zur Folge, daß die auf dem Grundkörper befindlichen Elektroden elektrisch gegen den Grundkörper isoliert sein müssen. Dadurch entstehen jedoch parasitäre Kapazitäten zwischen den Elektroden und dem Grundkörper, die sich ebenfalls nachteilig auf die Empfindlichkeit des Sensors auswirken. Zur Elimination dieser parasitären Kapazitäten sind deshalb bei dem bekannten kapazitiven Drucksensor auf dem Grundkörper zwei zueinander konzentrisch angeordnete Elektroden vorgesehen, von denen die äußere ringförmige Elektrode mit der Membran eine von der Auslenkung der Membran praktisch unabhängige Kapazität bildet, während der zwischen der inneren kreisscheibenförmigen Elektrode und der Membran gebildete Kondensator eine von der Auslenkung abhängige Kapazität hat. Im Grundkörper ist eine Verstärkerschaltung integriert, mit der nur die Differenz zwischen diesen beiden Kapazitäten erfaßt wird, so daß die Streukapazität auf dem Grundkörper angeordneten Elektroden und dem Grundkörper den Meßwert nicht mehr beeinflussen kann.

Die US-A-4 495 820 bildet die Basis für den Oberbegriff des Patentanspruchs 1.

Es ist ferner aus der EP-A2-0 291 885 ein Drucksensor bekannt mit einer aus einem Metallblech gebildeten Druckmembran als flexible Elektrode, die mit einem Metallgehäuse verbunden ist. Die Elektrode bildet zusammen mit einer ihr gegenüber angeordneten weiteren, stationären Elektrode einen Kondensator. Als Meßsignal wird mit Hilfe von Kontakten an der stationären Elektrode die Kapazitätsänderung dieses Kondensators bei Auslenkung der ersten, flexiblen Elektrode infolge des Druckes erfaßt. Die Metallmembran ist in ihrem mittleren Bereich freitragend über dem Metallgehäuse ausgebildet, jedoch nicht von dem Gehäsue elektrisch isoliert. Damit liegen die Elektrode und das Gehäuse auf gleichem elektrischen Potential und das Problem parasitärer Kapazitäten zwischen Elektrode und Gehäuse tritt nicht auf.

Der Erfindung liegt nun die Aufgabe zugrunde, einen kapazitiven Sensor mit wenigstens einer auf einem Grundkörper aus einem Halbleitermaterial elektrisch isoliert angeordneten Elektrode anzugeben, bei dem störende parasitäre Kapazitäten zwischen der Elektrode und dem Grundkörper weitgehend verringert sind.

Die genannte Aufgabe wird erfindungsgemäß gelöst mit den Merkmalen des Patentanspruchs 1. Durch die wenigstens teilweise freitragende Anordnung des Bereichs der Isolatorschicht mit der Elektrode über dem Grundkörper wird wenigstens auf einem Teil der Elektrodenfläche der Abstand zwischen der Elektrode und dem Grundkörper vergrößert. Diese Vergrößerung des Abstandes hat eine Verringerung der zwischen dieser Elektrode und dem Grundkörper auftretenden parasitären Kapazität zur Folge.

Zur Messung eines Druckes ist ein kapazitiver Sensor vorgesehen, der einen als Teil einer Membran ausgebildeten mechanisch relativ zu einem Grundkörper auslenkbaren Körper enthält. Vorzugsweise wird dieser Körper durch eine zentrale Verdickung der Membran gebildet, die mit einer von der Membran abgewandten und parallel zu ihr verlaufenden Flachseite versehen ist. Diese Flachseite kann dann als eine Elektrode des mit dem Körper gebildeten Kondensators vorgesehen sein. Durch diese Maßnahme ist gewährleistet, daß sich die auslenkbare Kondensatorelektrode im wesentlichen nur parallel und verformungsfrei in Richtung der Auslenkung verschiebt.

Besonders geeignet zur Miniaturisierung sind Sensoren die aus einem Halbleitermaterial, insbesondere aus Silizium bestehen, da sie mikromechanisch besonders leicht bearbeitet und strukturiert werden können. Dabei sind insbesondere Aufbauten vorteilhaft, bei denen der auslenkbare Körper und der Grundkörper aus Silizium bestehen. Der elektronische Schaltkreis zur Erfassung der Kapazitätsänderung kann dann sowohl in den Grundkörper als auch in den auslenkbaren Körper integriert werden. In einer bevorzugten Ausführungsform sind für den elektronischen Schaltkreis hybride Chips vorgesehen, die beispielsweise auf die Oberfläche des Grundkörpers geklebt sind und an die Elektroden des Grundkörpers gebondet oder verlötet sind. Die zur Herstellung des auslenkbaren Körpers sowie der freitragenden Elektroden auf dem Grundkörper in der mikromechanischen Technologie erforderlichen Ätzschritte und die zur Herstellung des integrierten Schaltkreises können dann auf unterschiedlichen Silizium-Wafern erfolgen. Dadurch entfallen beispielsweise zusätzliche Prozeßschritte, die erforderlich sind, um die in den Silizium-Wafer integrierten elektronischen Schaltkreise vor den zur mechanischen Strukturierung erforderlichen Ätzprozessen zu schützen. Außerdem kann der technologisch aufwendige IC-Herstellungsprozeß auf einem separaten Wafer mit einer besseren Ausnutzung der Wafer-Fläche erfolgen.

Zur Erhöhung der mechanischen Stabilität ist vorzugsweise eine Anordnung vorgesehen, bei der die Elektroden auf oder in einer Isolatorschicht angeordnet sind, die auf mehreren Sockeln abgestützt ist.

Zur weiteren Erläuterung der Erfindung wird auf die Zeichnung verwiesen, in deren
- Figur 1: ein kapazitiver Sensor gemäß der Erfindung schematisch in einem Schnittbild veranschaulicht ist.
- Figur 2: zeigt eine Elektrodenanordnung auf einem Grundkörper eines kapazitiven Drucksensors in einer Draufsicht und in
- Figuren 3 und 4: wird eine besonders vorteilhafte Ausgestaltung der über dem Grundkörper freitragend angeordneten Elektrodenanordnung jeweils in einem Schnittbild veranschaulicht.

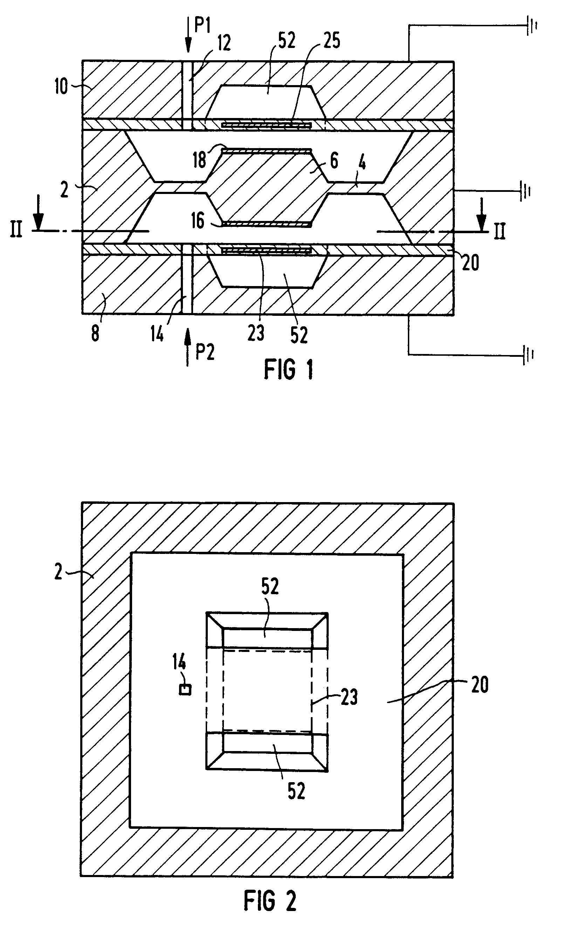

Gemäß Figur 1 enthält ein kapazitiver Sensor einen mit einer Elektrode 16 versehenen und relativ zu einem feststehenden Grundkörper 8 auslenkbaren Körper 6. Im Beispiel der Figur ist ein kapazitiver Drucksensor dargestellt, bei dem der Körper 6 als Teil einer Membran 4 ausgebildet und über diese Membran 4 mit einem Stützrahmen 2 verbunden ist. Der Körper 6 wird durch eine Verdickung im zentralen Bereich der Membran 4 gebildet und hat eine dem Grundkörper 8 zugewandte, parallel zu der durch die Membran aufgespannten Ebene orientierte Flachseite. Auf dieser Flachseite ist die Elektrode 16 angeordnet. Durch die Verdickung wird bewirkt, daß bei einer Auslenkung der Membran die Elektrode 16 im wesentlichen nur parallel zur Richtung der Auslenkung verschoben wird. Außerdem werden die mechanischen Eigenschaften der Membran 4 nicht durch die Elektrode 16 beeinflußt.

Der Stützrahmen 2, die Membran 4 und der Körper 6 bestehen vorzugsweise aus monokristallinem Silizium mit einer (100)-Oberfläche. Membran 4 und Körper 6 können dann durch anisotropes Ätzen, beispielsweise mit einer Mischung aus Ethylendiamin und Pyrocatechol EDP oder Kaliumhydroxid KOH, hergestellt werden. Die Flanken zwischen der Membran 4 und dem Körper 6 sowie dem Stützrahmen 2 werden dann durch (111)-Flächen gebildet, so daß sich eine Membran 4 in Gestalt eines rechteckigen Rahmens ergibt, über den sich im Zentrum der Körper 6 als Sockel in Gestalt eines Pyramidenstumpfes erhebt.

Im Beispiel der Figur ist eine auf dem Körper 6 aufgedampfte und beispielsweise aus Aluminium Al bestehende Elektrode 16 dargestellt. Der Stützrahmen 2, die Membran 4 und der Körper 6 können jedoch auch aus hochdotiertem Silizium bestehen, so daß eine eigens auf die Oberfläche des Körpers 6 aufgedampfte Elektrode nicht erforderlich ist.

Der Stützrahmen 2 ist über eine Isolatorschicht 20, beispielsweise Siliziumdioxid SiO₂ oder Siliziumnitrid Si₃N₄, vakuumdicht auf einen ebenfalls aus Silizium bestehenden Grundkörper 8 aufgebracht.

Der Grundkörper 8 ist mit einer Durchlaßöffnung 14 versehen, über die ein zu messender Druck P2 beispielsweise durch ein inkompressibles Fluid auf die Membran 4 übertragen wird.

Im Beispiel der Figur ist in der Isolierschicht 20 des Grundkörpers 8 gegenüber der Elektrode 16 eine Elektrode 23 angeordnet, die mit der Elektrode 16 einen Kondensator bildet. Da sich die Elektrode 16 und der Grundkörper 8 auf gleichem Potential befinden, ist dieser zu messenden Kapazität eine zwischen der Elektrode 23 und dem Grundkörper 8 auftretende parasitäre Kapazität überlagert, die zu einer Verringerung der Empfindlichkeit führt. Die Elektrode 23 befindet sich deshalb in der Isolatorschicht 20 in einem Bereich, in dem sich die Isolatorschicht frei über den Grundkörper 8 erstreckt. Zwischen diesem Bereich und dem Grundkörper 8 befindet sich eine Wanne 52, die durch Unterätzen der Isolatorschicht 20 hergestellt werden kann. Dies führt zu einer Vergrößerung des Abstandes zwischen der Elektrode 23 und dem Grundkörper 8 und somit zu einer Verringerung der Kapazität des aus Elektrode 23 und Grundkörper 8 gebildeten parasitären Kondensators.

Im Beispiel der Figur ist ein Differenzdruck-Sensor mit symmetrischem Aufbau veranschaulicht, bei dem der Stützrahmen 2, die Membran 4 und der Körper 6 eine beispielsweise spiegelsymmetrisch zu einer parallel zur Ebene der Membran verlaufenden Symmetrieebene 9 gestaltet ist. Der Körper 6 hat dann die Form zweier zusammengesetzter Pyramidenstumpfe. Der Stützrahmen 2 ist zwischen dem Grundkörper 8 und einer Deckplatte 10 angeordnet, die ebenfalls mit einer Durchlaßöffnung 12 versehen ist, über die die Membran mit einem Druck P1 beaufschlagt werden kann. Bei einem entsprechenden Absolutdruck-Sensor ist der Raum zwischen Deckplatte 10 und Membran 4 evakuiert. In einem Ausführungsbeispiel ist bei einem Drucksensor für den Meßbereich 10⁴ Pa eine Membran 4 mit einer Dicke von etwa 50 µm und einer Rahmenbreite von etwa 1 mm vorgesehen. Die Grundfläche des pyramidenstumpfförmigen Körpers 6 beträgt in diesem Beispiel etwa 4 x 4 mm² und der Abstand zwischen der Elektrode 16 und den Elektroden 24 beträgt etwa 5 bis 10 µm.

Der Körper 6 und die Deckplatte 10 sind auf ihrer einander zugewandten Flachseiten ebenfalls mit Elektroden 18 bzw. 25 versehen, die ebenfalls einen Kondensator bilden.

Eine Auslenkung der Membran 4, im Beispiel der Figur nach oben wenn der Druck P1 kleiner als der Druck P2 ist, bewirkt eine Verringerung der Kapazität der von den Elektroden 16 und 23 gebildeten Kondensators und eine Vergrößerung der Kapazität des von den Elektroden 18 und 25 gebildeten Kondensators. Durch Auswertung der Kapazitätsdifferenz können sowohl die Empfindlichkeit erhöht als auch die Querempfindlichkeiten verringert werden.

Der im Beispiel der Figur dargestellte spiegelsymmetrische Aufbau des Stützrahmens 2, der Membran 4 und des Körpers 6 ist nicht notwendig, da die Meßkapazitäten weder im nichtausgelenkten Zustand der Membran 4 noch hinsichtlich ihrer betragsmäßigen Abhängigkeit von der Auslenkung der Membran 4 übereinstimmen müssen.

Figur 2 zeigt die Anordnung der Elektrode 23 auf der Grundplatte 8 in einer Draufsicht. Die Elektrode 23 ist gestrichelt eingezeichnet und befindet sich in einem die Wanne 52 überspannenden Steg aus Isolatormaterial, der durch anisotropes Unterätzen hergestellt worden ist. Die Seitenwände der Wanne 52 werden dann bei einem Grundkörper 8 mit einer (100)-Oberfläche aus (111)-Flächen gebildet.

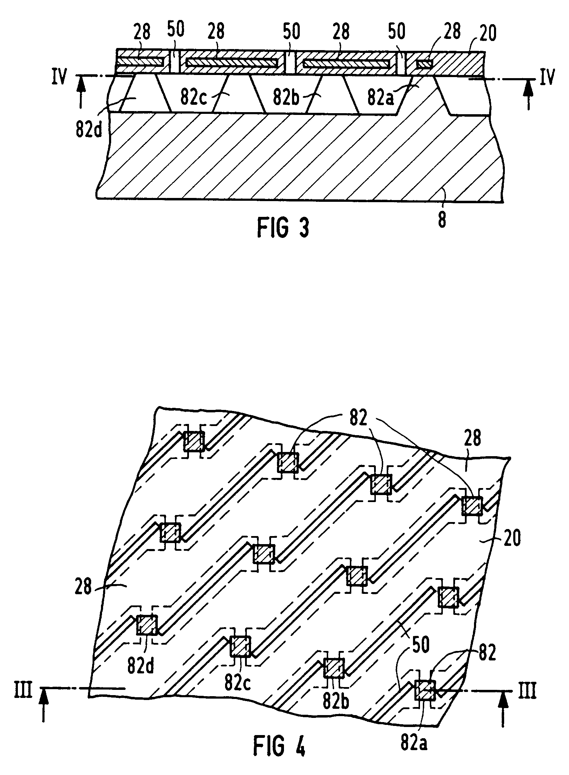

Aus Gründen der mechanischen Stabilität kann es von Vorteil sein, diesen Steg noch an einer oder an mehreren Stützstellen abzustützen. Gemäß Figuren 3 und 4 sind deshalb in einer besonders bevorzugten Ausgestaltung der Erfindung auf dem Grundkörper 8 Elektroden 28 vorgesehen, die auf oder in einer nur teilweise freitragenden Isolatorschicht 20 über der Grundplatte 8 angeordnet sind.

Im Schnittbild gemäß Figur 3 ist zu erkennen, daß die Elektrode 28 über die Isolatorschicht 20 auf pyramidenstumpfförmigen Sockeln 82a, b, c, d abgestützt sind.

In Figur 4 ist ein Schnittbild eines parallel zu der mit den Elektroden 28 versehene Oberfläche der Grundplatte 8 verlaufenden Flächenausschnitts dargestellt. Die Isolatorschicht 20 ist über mehrere Sockel freitragend auf dem Grundkörper 8 abgestützt und mit mehreren beispielsweise in [100]-Richtung verlaufenden Schlitzen 50 versehen. Diese Schlitze werden zur Unterätzung der Isolationsschicht 20 benötigt und ermöglichen den Angriff des anisotropen Ätzmittels auf das Siliziumsubstrat der Grundplatte 8. Die vorher geeignet strukturierten Elektroden 28, die in der Figur gestrichelt eingezeichnet sind, erstrecken sich im Beispiel der Figur im wesentlichen parallel zu den Schlitzen 50 und sind miteinander in den über den Sockeln 82 liegenden Bereich der Isolationsschicht 20 elektrisch verbunden.

Die Ausmaße der pyramidenförmigen Sockel 82 hängen von der Dauer der Einwirkung des anisotropen Ätzmittels ab und werden bei fortschreitendem Ätzprozeß kleiner. In einer weiteren Ausgestaltung der Erfindung wird der Ätzprozeß soweit fortgeführt, daß auch diese Sockel 82 verschwinden und sich eine freitragende Isolatorschicht 20 ergibt, die nur noch an ihren äußeren Rändern mit dem Grundkörper 8 verbunden ist. Unter dieser freitragenden Isolatorschicht 20 liegt dann ähnlich Zur Ausführungsform gemäß Figuren 1 und 2 eine rechteckige, durch (111)-Seitenflächen begrenzte Wanne.

Die erfindungsgemäßen Ausgestaltungen sind nicht auf Ausführungsformen mit einer einzigen auf dem Grundkörper angeordneten Elektrode beschränkt. Auf dem Grundkörper können sich auch weitere elektrisch voneinander isolierte Elektroden befinden, so daß mit dem auslenkbaren Körper mehrere Kondensatoren gebildet werden, deren Kapazitätsänderungen in einem nachgeschalteten elektronischen Schaltkreis meßtechnisch erfaßt werden.

## Patentansprüche

1. Kapazitiver Sensor mit einem Grundkörper (8) aus einem Halbleitermaterial, mit einer Isolatorschicht (20) auf dem Grundkörper (8), und mit wenigstens einer relativ zum Grundkörper (8) raumfest und von diesem elektrisch isoliert angeordneten Elektrode (23), die Teil eines Kondensators mit einer von der Meßgröße abhängigen Kapazität ist, **dadurch gekennzeichnet,** daß die Elektrode (23) in oder auf der Isolatorschicht (20) angeordnet ist und daß die Isolatorschicht (20) in einem Bereich mit der Elektrode (23) wenigstens teilweise freitragend über dem Grundkörper (8) ausgebildet ist.

2. Kapazitiver Sensor nach Anspruch 1, **dadurch gekennzeichnet,** daß die Elektrode (23) durch wenigstens einen Sockel (82) abgestützt ist.

3. Kapazitiver Sensor nach einem der Ansprüche 1 oder 2, **dadurch gekennzeichnet,** daß ein oder mehrere Kondensatoren mit einer von der mechanischen Auslenkung eines Körpers (6) aus einem Halbleitermaterial abhängigen Kapazität vorgesehen sind.

4. Kapazitiver Sensor nach Anspruch 3, **dadurch gekennzeichnet,** daß zur Messung eines Druckes der Körper (6) als Teil einer Membran (4) ausgebildet ist.

5. Kapazitiver Sensor nach einem der Ansprüche 1 bis 4, **dadurch gekennzeichnet,** daß als Halbleitermaterial Silizium Si vorgesehen ist.

## Claims

1. A capacitive sensor with a base body (8) of a semi-conductor material, with an insulator layer (20) on the base body (8), and at least one electrode (23) which is arranged spatially fixed relative to the base body (8), and electrically insulated from this, which is a part of a capacitor with a capacitance which is dependent on the measurable quantity, characterised in that the electrode (23) is arranged in or on the insulator layer (20) and in that a region of the insulator layer (20) with the electrode (23) is arranged at least partially self-supporting above the base body (8).

2. A capacitive sensor according to claim 1, characterised in that the electrode (23) is supported by at least one base (82).

3. A capacitive sensor according to one of claims 1 or 2, characterised in that one or several capacitors are provided with a capacitance which is dependent on the mechanical deflection of a body (6) of a semi-conductor material.

4. A capacitive sensor according to claim 3, characterised in that for measuring pressure the body (6) is formed as a part of a membrane (4).

5. A capacitive sensor according to one of claims 1 to 4, characterised in that silicon Si is provided as the semi-conductor material.

## Revendications

1. Capteur capacitif comportant un corps de base (8) formé d'un matériau semiconducteur, une couche isolante (20) située sur le corps de base (8), et au moins une électrode (23), qui est disposée de façon fixe dans l'espace par rapport au corps de base (8) et est isolée électriquement de ce dernier et fait partie d'un condensateur possédant une capacité qui dépend de la grandeur de mesure, caractérisé par le fait que l'électrode (23) est disposée dans ou sur la couche isolante (20), et que la couche isolante (20) est formée dans une région comportant l'électrode (23), en étant au moins partiellement disposée en console au-dessus du corps de base (8).

2. Capteur capacitif suivant la revendication 1, caractérisé par le fait que l'électrode (23) est supportée par au moins un socle (82).

3. Capteur capacitif suivant l'une des revendications 1 ou 2, caractérisé par le fait qu'il est prévu un ou plusieurs condensateurs possédant une capacité qui dépend de la déviation mécanique d'un corps (6) réalisé en un matériau semiconducteur.

4. Capteur capacitif suivant la revendication 3, caractérisé par le fait que pour la mesure d'une pression, le corps (6) est réalisé sous la forme d'une partie d'une membrane (4).

5. Capteur capacitif suivant l'une des revendications 1 à 4, caractérisé par le fait que du silicium Si est prévu en tant que matériau semiconducteur.
